(19) Europäisches Patentamt / European Patent Office / Office européen des brevets

(11) **EP 2 234 694 B1**

(12) **EUROPEAN PATENT SPECIFICATION**

(45) Date of publication and mention
of the grant of the patent:
**12.02.2020 Bulletin 2020/07**

(21) Application number: **08855143.7**

(22) Date of filing: **28.11.2008**

(51) Int Cl.:
*F01D 15/00* [(2006.01)]    *F01K 13/00* [(2006.01)]
*F02C 1/02* [(2006.01)]    *F23J 15/06* [(2006.01)]
*F22B 37/00* [(2006.01)]    *F25J 3/06* [(2006.01)]
*B01D 53/00* [(2006.01)]    *F02C 6/16* [(2006.01)]

(86) International application number:
**PCT/US2008/085075**

(87) International publication number:
**WO 2009/070785 (04.06.2009 Gazette 2009/23)**

(54) **CARBON DIOXIDE CAPTURE FROM FLUE GAS**

ABFANGEN VON KOHLENDIOXID AUS RAUCHGAS

CAPTURE DE DIOXYDE DE CARBONE DANS DES GAZ DE FUMÉE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.11.2007 US 4551**
**06.12.2007 US 5802**

(43) Date of publication of application:
**06.10.2010 Bulletin 2010/40**

(73) Proprietor: **Sustainable Energy Solutions, LLC**
**Orem UT 84057 (US)**

(72) Inventor: **BAXTER, Larry, L.**
**Provo, UT 84602 (US)**

(74) Representative: **Studio Torta S.p.A.**
**Via Viotti, 9**
**10121 Torino (IT)**

(56) References cited:
**WO-A1-2010/012658**    **DE-A1-102004 054 354**
**FR-A1- 2 894 838**    **US-A- 1 992 486**
**US-A- 4 977 745**    **US-A- 5 321 946**
**US-A- 5 467 722**    **US-A- 5 724 805**
**US-A- 5 974 829**    **US-B1- 6 898 936**

**Description**

**BACKGROUND OF THE INVENTION**

**1. The Field of the Invention**

The present invention relates to capture of carbon dioxide from a flue gas.

**2. The Relevant Technology**

The separation of carbon dioxide from other light gases such as nitrogen is important for achieving carbon dioxide sequestration. The flue gases of a conventional power station typically contain from about 4% (by volume) to about 14% carbon dioxide ($CO_2$). It is commonly believed that this $CO_2$ represents a significant factor in increasing the greenhouse effect and global warming. Therefore, there is a clear need for efficient methods of capturing $CO_2$ from flue gases so as to produce a concentrated stream of $CO_2$ that can readily be transported to a safe storage site or to a further application. $CO_2$ has been captured from gas streams by five main technologies: oxyfiring, where oxygen is separated from air prior to combustion, producing a substantially pure $CO_2$ effluent; absorption, where $CO_2$ is selectively absorbed into liquid solvents; membranes, where $CO_2$ is separated by semipermeable plastics or ceramic membranes; adsorption, where $CO_2$ is separated by adsorption on the surfaces of specially designed solid particles; and, low temperature/high pressure processes, where the separation is achieved by condensing the $CO_2$.

In the past, the most economical proven technique to capture $CO_2$ from a flue gas has been to scrub the flue gas with an amine solution to absorb $CO_2$ to the solution. This technology has reached the commercial state of operation for $CO_2$ capture systems from small scale flue gases and from specialty processes. However, its application decreases considerably the total efficiency of the power plant.

Another type of process that has received significant attention is the oxy-combustion systems, which uses oxygen, usually produced in an air separation unit (ASU), instead of air, for the combustion of the primary fuel. The oxygen is often mixed with an inert gas, such as recirculated flue gas, to keep the combustion temperature at a suitable level. Oxy-combustion processes produce flue gas having $CO_2$, water and $O_2$ as its main constituents; the $CO_2$ concentration being typically greater than about 70% by volume. Treatment of the flue gas is often needed to remove air pollutants and noncondensed gases (such as nitrogen) from the flue gas before the $CO_2$ is sent to storage.

US 5467722 A and US 1992486 A disclose methods for separating carbon dioxide from a flue gas of a hydrocarbon processing plant by anti-sublimation. Similarly, WO2010/012658, published on 04.02.2012 with an oldest priority date of 01.08.2008, discloses a method for extracting carbon dioxide from a flue gas by anti-sublimation.

**BRIEF SUMMARY**

The methods of the invention can produce a desirably pure, pressurized $CO_2$ stream and a nearly $CO_2$-free nitrogen stream from stationary power flue gases. In comparison to oxygen-fired combustion and other known techniques, the present invention provides improved efficiencies and reduced capital costs. In contrast to oxy-fired systems, the present invention is carried out on flue gasses that include substantial amounts of nitrogen or other light gases. The methods and systems use cryogenics to compress and cool the carbon dioxide to yield condensed carbon dioxide from the flue gas stream. The condensed carbon dioxide is separated from the gaseous nitrogen or other light gases at least in part based on the phase difference. The methods and systems are made economical in part by using the cooled separated light gases (e.g., nitrogen) to cool the flue gases. In this manner a portion of the energy needed to cool the flue gas is recovered. The energy efficiency and cost effectiveness advantages further stem from the formation of an essentially pure, solid-phase $CO_2$ phase that does not need to be distilled or purified using other costly purification steps, thus dramatically reducing operating and capital costs. Finally, $CO_2$ compression can be performed on the condensed-phase $CO_2$ stream, which is more energy efficient compared to the operating and capital cost of compressing gaseous $CO_2$ to conditions required for eventual storage or subsequent use. As described more fully below, the present invention includes several other techniques for recovering the energy spent to cool and compress the flue gas.

The present invention refers to a method for efficiently separating carbon dioxide from a flue gas of a hydrocarbon processing plant according to claim 1.

In a preferred embodiment, the methods include removing impurities from the flue gas prior to condensing the carbon dioxide. The impurities are economically removed from the flue gas by cooling and compressing the flue gas to a temperature and pressure selected to condense the impurities without condensing the carbon dioxide. The condensed impurities can then be removed from the system. Thereafter, the carbon dioxide is condensed and separated as a substantially pure carbon dioxide stream.

In one embodiment, the impurities that are extracted via condensation prior to condensation of the carbon dioxide include, but are not limited to $SO_2$, $NO_2$, HCl, or Hg. Because the flue gas is being compressed and cooled to condense carbon dioxide, the condensation and removal of these and other impurities is highly economical. Depending on flue gas moisture content, these impurities will form acids, liquids, or solids and can be separated from the remaining flue gas based on these differences in phase.

In addition or alternatively, one or more impurities can be removed using a catalyst or solvent absorber. The flue gas can be catalytically treated with the flue gas under pressure to increase the efficiency of the catalytic reaction or absorption. For example, $NO_x$ components can be removed using selective catalytic reduction technology (SCR). High efficiencies can be achieved by carrying out the reaction at high pressures. Examples of suitable pressures include greater than 34.47 KPa (5 psi), more preferably greater than 413.69 KPa (60 psi), and most preferably greater than 689.48 KPa (100 psi).

In another embodiment of the invention, the methods include storing a light-gas stream (e.g., nitrogen or untreated flue gas) under high pressure. The stored high-pressure gas provides a source of energy that can be used to generate power. During peak power demand, the stored high-pressure gas can be expanded to do work. Thus, a portion of the energy required to compress the gas can be recovered by expanding the gas in a turbine to generate power during a period when power demand is high.

In one embodiment, the power required for compression comes from either a power plant or a grid-connected intermittent source or a cyclical source (such as, but not limited to windmills or excess power plant capacity at off-peak times) or a combination. The energy storage increases profitability and the efficiency of the system, thereby making the system more economical and competitive with current systems.

In a grid system involving potentially highly variable wind power generation (e.g., in most grid systems with wind-based or solar generation), the energy storage mechanism of the invention provides a mechanism to effectively manage the grid and thereby enable increased renewable capacity.

Essentially all grid systems involve daily power demand cycles with large differences from peak to low points. Perhaps more significantly, the energy storage features described herein help solve the system-wide problem of meeting peak demand even as carbon capture technology decreases net effective capacity by shifting the load to lower demand times and using storage to compensate during high demand. This feature postpones or eliminates the need to construct new generation capacity for $CO_2$ mitigation. To the extent that compression represents a sunk cost and parasitic loss for $CO_2$ sequestration, the effective efficiency and cost of the energy storage are turbine efficiencies (typically 85-95 %) and the cost of the pressure vessel.

By integrating one or more processes such as removal of impurities and/or storage of energy, the cost effectiveness of the process described herein compete well with alternative systems that provide only energy storage or only $CO_2$ capture.

These and other objects and features of the present invention will become more fully apparent from the following description and appended claims, or may be learned by the practice of the invention as set forth hereinafter.

## BRIEF DESCRIPTION OF THE DRAWINGS

To further clarify the above and other advantages and features of the present invention, a more particular description of the invention will be rendered by reference to specific embodiments thereof which are illustrated in the appended drawings. It is appreciated that these drawings depict only illustrated embodiments of the invention and are therefore not to be considered limiting of its scope. The invention will be described and explained with additional specificity and detail through the use of the accompanying drawings in which:

Figure 1 illustrates a block diagram of a method according to one embodiment described herein;

Figure 2 illustrates a simplified flow diagram of a portion of a $CO_2$ capture system;

Figure 3 illustrates two stages of the compression and expansion system of Figure 2;

Figure 4 illustrates example recuperative refrigeration and separation portions of the flow diagram of Figure 2;

Figure 5 illustrates the process compression with interstage, recuperative cooling illustrated in Figure 3 without expansion turbines;

Figure 6 illustrates a comparison of the ratio of work produced in a turbine to the heat transferred to the working fluid for each of three working fluids in a simple expansion;

Figure 7 illustrates a carbon dioxide phase diagram;

Figure 8 illustrates binary $CO_2$-$N_2$ thermodynamic data and non-ideal predictions, illustrating the non-ideal nature of the mixture and the ability of advanced thermodynamic models to capture this nonideality and also illustrating the impossibility of forming a liquid phase from flue gases containing less than approximately 15% $CO_2$;

Figure 9 illustrates a three-phase $CO_2$-$N_2$-$O_2$ diagram at -55 °C and an average 129 atm illustrating the effects of oxygen on the phase envelope;

Figure 10 illustrates the frost/freezing points for a typical dry flue gas containing 14% carbon dioxide, 3% oxygen, and impurities as a function of temperature and pressure, indicating the process conditions required to remove the indicated amounts of $CO_2$ from the gas phase.

Figure 11 illustrates three solutions of differing complexity for the concentration profile of carbon dioxide in a 300 K tank where the numerical solution illustrated is according to calculations according to the present invention; and

Figure 12 illustrates estimated cost per avoided ton of carbon dioxide for a variety of processes in comparison to the process of the invention.

## DETAILED DESCRIPTION

### I. Introduction

The methods and systems of the invention produce a nearly pure, pressurized $CO_2$ stream and a nearly $CO_2$-free light-gas stream from stationary power flue gases. In comparison to oxygen-fired combustion and other well-documented alternatives, the present invention provides improved efficiencies and reduced capital and operating costs. Improved energy efficiencies using the present invention can be achieved through elimination of costly and energy-intensive distillation or comparable purification steps, replacement of costly and energy-intensive $CO_2$ compression steps with comparatively inexpensive and energy efficient pressurization of condensed-phase $CO_2$, storage of energy in the form of high-pressure light gasses, and/or reduction of water usage at processing plants. Reduced capital and operating costs can be achieved through these same means and by removal of impurities (e.g., acids), operation at less severe temperature extremes, enabling cheaper and a wider range of materials of construction, and lower costs associated with smaller volumetric flow rates and less extreme temperature ranges.

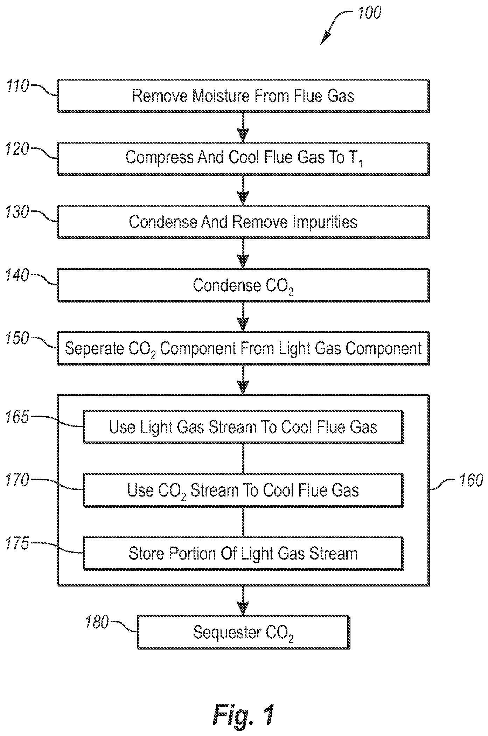

Figure 1 provides an overview of an example method according to one embodiment of the invention. The method 100 includes receiving a flue gas from a hydrocarbon processing, combustion, gasification, or similar plant and removing the moisture to form a partially dried gas stream (step 110). The partially dried gas stream is compressed to a desired pressure and cooled to a first temperature $T_1$ using a first heat exchanger (step 120). For example, the dried flue gas can be compressed in a series of compressors and cooled using interstage heat exchangers that dissipate heat using air or water.

In step 130, impurities are removed from the compressed flue gas. Impurities can be removed by condensing the impurities and removing the condensed impurities from the gas stream prior to condensing the carbon dioxide. The impurities are typically condensed at a temperature lower than ambient, but greater than the temperature at which the $CO_2$ is condensed. The one or more impurities can be removed using a heat exchanger with an integrated condenser separator that can remove the condensed impurities as a side stream. Examples of impurities that can be removed include, but are not limited to, $SO_2$, $NO_2$, $HCl$, or $Hg$.

In a preferred embodiment, the impurities that are removed are salable products such as acids or condensed-phase sulfur compounds. In step 140, the compressed flue gas is then cooled using a second heat exchanger to reach a temperature of $T_2$ where the carbon dioxide in the compressed flue gas condenses to form a solid condensed $CO_2$ component and a light gas component. In an alternative method which is not covered by the claims, it can be highly advantageous to expand the compressed gas to achieve the final temperature in which the $CO_2$ condenses. Expanding allows a majority of the $CO_2$ to condense in the flue gas instead of on a surface, which facilitates removal of the condensed $CO_2$ component.

In step 150, the condensed $CO_2$ component is separated from the light gas component to yield a condensed-phase $CO_2$ stream and a light-gas stream. According to the invention, the condensed $CO_2$ component is a solid. According to the invention, the condensed $CO_2$ component is removed from the heat exchanger as a solid. Removing the condensed $CO_2$ component from the heat exchanger as a solid can avoid the lost energy associated with heating the heat exchanger.

As mentioned above, in a non inventive alternative the $CO_2$ is condensed by expanding the condensed-gas stream to lower its temperature. In this alternative, the compressed gas stream is cooled to near the frost point of the carbon dioxide and such that the expansion only requires a few degrees of temperature drop. This step can be highly advantageous for facilitating separation of the condensed $CO_2$ component from the light-gas component and recovering the condensed $CO_2$ component since the majority of the carbon dioxide will be condensed in a suspended form. According to the invention, a portion of the carbon dioxide will accumulate on the surfaces of the vessel or chamber where the condensation is carried out and the chamber is configured to allow the solid to be removed from the surfaces of the chamber using mechanical means. For example, the mechanical mechanism for removing solid $CO_2$ can be a mechanical scraper that scrapes the walls of a drum or other interior surface. The mechanical mechanism can be a screw mechanism that scrapes the walls of a tube and/or moves the solid material in a desired direction. In one embodiment, the mechanical mechanism can be a bag filter or a wire mesh that collects solid $CO_2$ and is then intermittently shaken by a drive motor. In an alternative not covered by the invention, the solid $CO_2$ can be filtered using a cyclone separator that separates the solid $CO_2$ from the light-gas component according to weight. Bag filters, the mechanisms for shaking bag filters, and cyclone separators are known in the art.

In another non inventive alternative the solid $CO_2$ component is condensed on blocks of solid carbon dioxide. The blocks of $CO_2$ are chunks of solid $CO_2$ that provide a surface for the condensed $CO_2$ component to collect on. Accordingly, the blocks can form a filter through which the light-gas stream passes.

The foregoing means are examples of means for separating a condensed $CO_2$ component from the light-gas component.

The separation techniques of the invention can achieve high removal rates for the carbon dioxide from the flue gas. In one embodiment, the present invention removes at least about 95% by weight of carbon dioxide, more preferably at least about 98%, and most preferably at least about 99%

The present invention also includes one or more energy recovery steps 160 that recover a portion of the energy used to compress and cool the flue gas. According to the invention, the light-gas stream is used in the second heat exchanger to cool the compressed gas stream (step 165). In addition, the cold condensed carbon dioxide stream can be used as the second coolant to cool the compressed flue gas (step 170). In yet another embodiment, a portion of the light gas component is maintained at a high pressure for energy storage purposes (step 175). In a final step 180, the carbon dioxide stream can be sequestered. Sequestering the carbon dioxide stream typically includes compressing the carbon dioxide stream in the condensed phase. Compressing the carbon dioxide stream in the condensed phase requires substantially less energy than compressing carbon dioxide in the gaseous phase.

The present invention may be applicable to any hydrocarbon processing plant, including those using coal, black liquor, natural gas, oil, biomass, waste, pet coke, oil shale, tar sands, and blends or combinations of these.

## II. Systems For separating $CO_2$ from Flue Gas

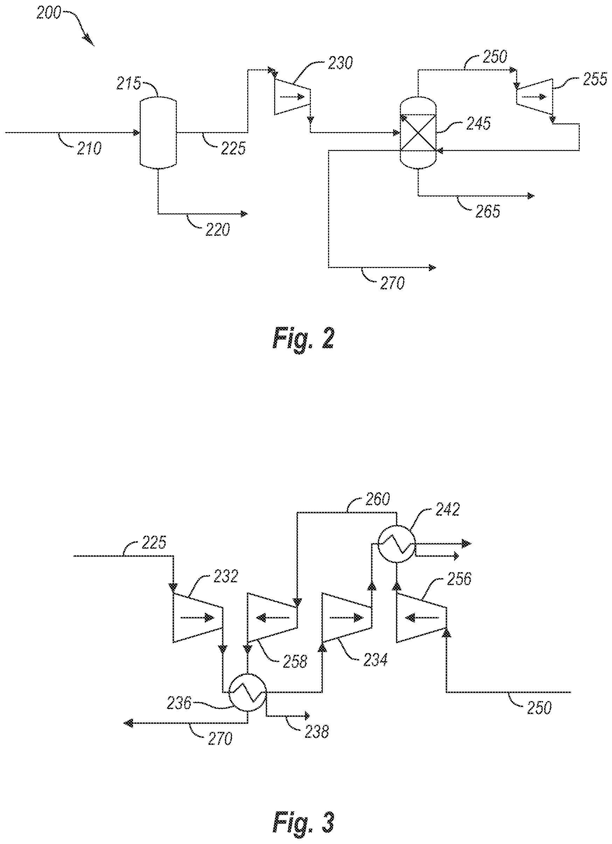

Figure 2 illustrates a partial schematic system that can be used to carry out an embodiment of the invention. In this embodiment, the energy storage capability is illustrated. However, those of skill in the art will appreciate that many embodiments of the invention can be carried out without the need for a high-pressure storage tank.

In system 200 shown in Figure 2, $CO_2$-containing flue gas 210 from a processing plant passes through a condensing heat exchanger 215, simultaneously cooling and partially drying the gas 210. The moisture stream 220 is discharged from the system and the dried flue gas 225 is introduced into a staged compression system 230 that includes interstage cooling. The compressed gas stream 230 can be compressed to almost any pressure so long as the vessel and compressor are suitable for handling such pressure. For example, the pressure can be in a range from about 1 atm to about 600 atm. Examples of pressures for relatively low pressure systems include pressures in a range from about 6.89 KPa (1 psi) to about 68.95 KPa (10 psi), more preferably about 13.79 KPa (2 psi) to about 41.37 KPa (6 psi). For high pressure storage applications, the pressures can be much higher. For example, the pressure can be from about 1013.25 KPa (10 atm) to about 60795.00 KPa (600 atm), more preferably about 2026.50 KPa (20 atm) to about 40530.00 (400 atm).

The high-pressure flue gas cools to below the frost point of $CO_2$ at the composition of the flue gas stream either in-line or in a high-pressure storage tank 245. The gas composition after removal of the design-specified amount of $CO_2$ determines the final temperature. That is, a system designed for 90% $CO_2$ removal operates at the frost point of flue gas containing 10% of the initial $CO_2$. The storage tank 245 also provides a quiescent environment in which $CO_2$ settles to the bottom of the tank, increasing the local partial pressure, which increase the dew/frost point and enhances separation efficiency. After freezing and purification, liquid $CO_2$ stream 265 flows from the process while the $N_2$-enriched stream 250 flows from the top of the tank. In order to recover a portion of the energy expended in compressing the flue stream, high pressure gas stream 250 is expanded in turbine 255 to substantially cool the light-gas stream 250. The cold light-gas stream 260 is then used in a second heat exchanger to cool the flue gas. (e.g., for the energy storage application illustrated), the cold light-gas stream can be used to cool the bottom of the high-pressure storage 245, which helps collect the $CO_2$.

In one embodiment, the expanding gases can accumulate waste, process, or high-quality heat from other plant processes and convert it to work through the expansion of the light-gas stream. Depending on temperatures and other conditions of both the compression and expansion, the turbine 255 can generate most or all of the energy used in the compression.

In one embodiment of the invention, the compression and expansion of gases (e.g., identified as compressor 230 and turbine 255 in Figure 2) occurs in a series of tightly coupled compression and expansion stages as shown in Figure 3. In a preferred embodiment, the compressors and turbines share the same shaft (not shown) to avoid electrical and mechanical inefficiencies. For this reason, Figure 3 illustrates compressors 232 and 234 and turbines 256 and 258 along a common axis. While Figure 3 shows two stages for each of compression and expansion, the number of stages can be different and more than two stages can be used. Systems operating at low pressures or with supplemental refrigeration require as few as 2-4 stages. However, in some embodiments, the power and capital requirements for the supplemental refrigeration both exceed the incremental costs of the additional stages for the directly cooled options.

As shown in Figure 3, dried flue gas 225 enters compressor 232. The dried flue gas 225 warms as it compresses, and this warm gas significantly decreases compression efficiency, since work scales with volumetric flow rate and therefore with temperature. After some compression, the flue gas enters a heat exchanger 236 where it cools, nominally to its pre-compressed temperature. At one or two stages, the combination of the pressure and the temperature suffices to condense essentially all or a portion of the acid components, specifically the $SO_2$, HCl, and $NO_2$. Depending on the moisture content in the flue gas, the acids may form condensed-phase acids or sulfur components. NO typically does not condense under the conditions that condense the foregoing acids. A small side flow 238 of these condensed impurities is shown in Figure 3.

The nitrogen-enriched stream from the process flows in the opposite direction through expansion turbines 256 and 258 in embodiments where the solid $CO_2$ separation occurs at pressures above ambient. These turbines can provide some of the power needed to drive the compressors and help to cool the flue gas, with the compressor-generated waste heat used to increase the nitrogen stream temperature between stages. This embodiment is most beneficial when the nitrogen gases are stored at pressure during off-peak demand periods and released during peak demand periods or when the nitrogen stream is heated well above ambient prior to the final expansion stage. A single, staged device could perform all of the processes needed in this expansion/compression cycle, two stages of which appear in Figure 3. While the nitrogen has been shown as cooling the compressed gas at both heat exchangers 236 and 242, the present invention also includes embodiments where an interstage heat exachanger is not cooled with nitrogen. Typically, at least one stage prior to the use of nitrogen is cooled by air or water.

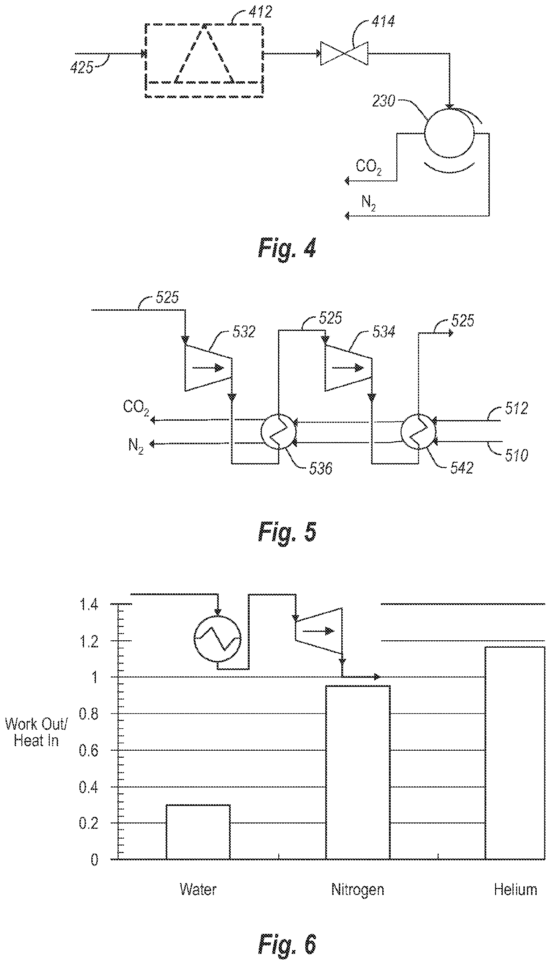

Although not shown in Figure 3, the condensed carbon dioxide stream can also pass through heat exchangers 236 and 242 to facilitate cooling of the flue gas. The returning $CO_2$-enriched stream passes through separate passages in the same series of heat exchangers and flows in the same direction as the light-gas stream 260. However, the $CO_2$ does not flow through the light-gas turbine stages, as it is exists in a condensed phase at this process stage and its ultimate condition is generally at relatively high (> 70 atm) pressure. The flow of carbon dioxide is illustrated in Figure 5.

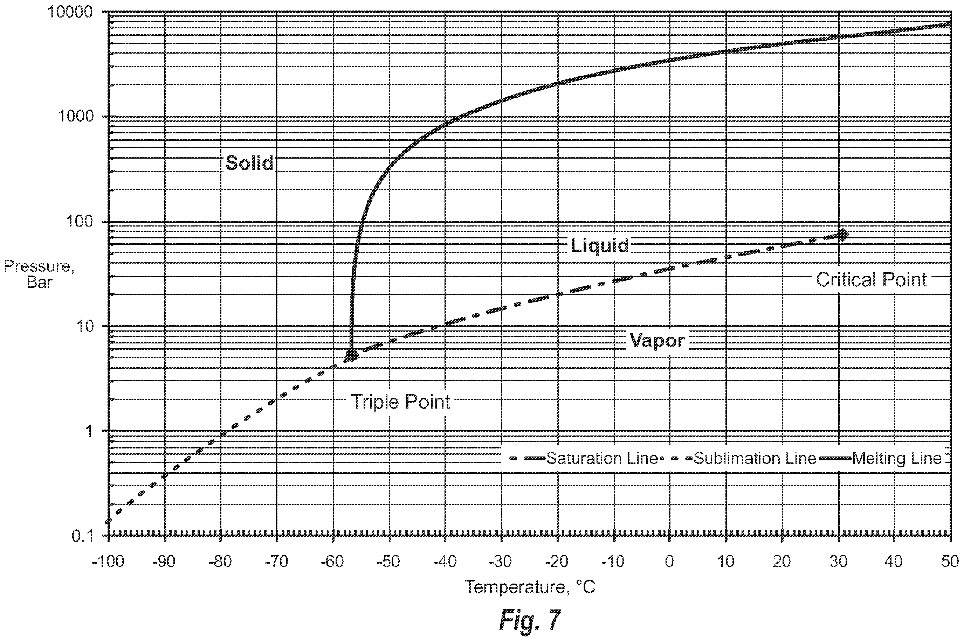

Nominally 20-70 °C temperature differences persist in the counterflow heat exchangers between the flue gas and nitrogen-enriched streams. The difference commonly increases with increasing $CO_2$ collection efficiencies. The final pressure and temperature depends on the desired collection efficiency and the presence of external refrigeration. The purpose of the compressor/expander train is to bring the flue gas to the frost point condition shown in Figure 7 at the lowest energy and capital costs. Mutliphase fluids damage some turbines, requiring careful turbine design or alternative processes in going from the frost line to the final conditions for $CO_2$ removal.

As shown in Figure 4, in the case of external cooling, the flue gas 425 enters an external refrigeration chamber 412, shown with dashed lines since it would not be in the direct cooling configuration. External cooling can bring the gases directly to the frost point with no additional process steps, or, in a non inventive alternative, they can be combined with gas expansion and perform some portion of the cooling, with gas expansion performing the rest.

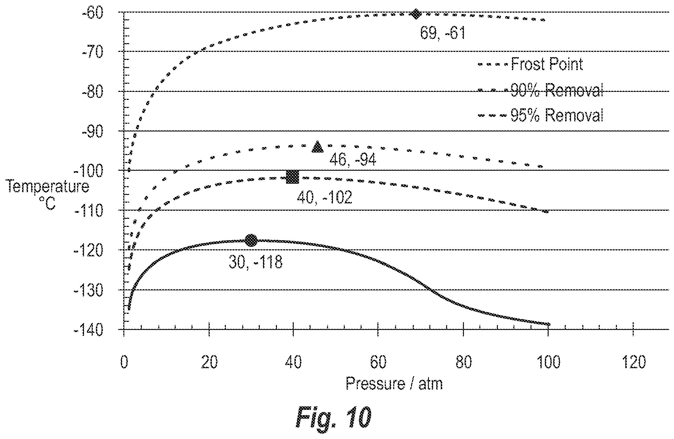

After the turbine expansion to the frost point, directly cooled gases pass through an expansion valve 414 (or appropriately designed turbine) through which the temperature and pressure drop from the frost line to the operating line for the design removal amount. In this process, the single-phase flow converts to a solid-gas form, with the solid being essentially pure $CO_2$ and the gas mostly nitrogen, commonly with some residual oxygen and other light gases and varying amounts of gaseous $CO_2$ according to the data shown in Figure 10, described below. Figure 10 indicates the combination of pressure and temperature that result in the indicated fractions of $CO_2$ removal from a typical flue gas emitted by a coal-based power plant. Those skilled in the art will recognize that similar but quantitatively different operating targets pertain to other processes and can be calculated using known thermodynamic principles in combination with the teachings of this disclosure.

Although the $CO_2$ forms a solid at the temperature and composition of its separation, the net effect of the separation is to form a liquid. The solid $CO_2$ melts in a somewhat warmer (-55 °C) vessel 230 at which point it forms a more easily handled liquid. The cold $CO_2$ and $N_2$ return through the expansion and heat exchange systems to decrease the energy required for cooling the flue gas, with the $N_2$ eventually vented to the atmosphere and the $CO_2$ delivered for ultimate storage or use.

Several modifications to this process can be carried out to decrease costs and energy consumption. Most dramatically, if the separation occurs at atmospheric pressure, or in the case of boiler integration coupled with water savings plans discussed below, the expansion turbines illustrated in Figure 3 are unnecessary. However, the heat exchangers remain. This simplifies the process and decreases the capital expenses. This simplified flow diagram is illustrated in Figure 5, in which the $CO_2$ and $N_2$ cooling flows 510 and 512, respectively, are shown. As in Figure 3, a single, staged device can perform all of the processes needed in this compression and heat exchange process, two stages of which appear in Figure 5.

One advantage of the system of the present invention is that it can be installed either as a bolt-on retrofit technology or as an integrated technology. The bolt-on option makes this technology highly attractive for existing power generating facilities. In this configuration, minimal changes to the existing facility are required. The flue gas is intercepted prior to the stack and flows through this process without modification of upstream systems. The only major requirement is that enough footprint is available for the new equipment (compressors and turbines).

## III. Removing Impurities

As illustrated in Figure 3, impurities such as metals and acids can be removed by condensing the impurities at a desired temperature and pressure prior to condensing the carbon dioxide and removing it from the flue gas. The combination of high pressures and low temperatures in this process provide alternative means for pollutant treatment not available in traditional, atmospheric-pressure flue gases. In many cases, pollutants can be removed with far greater efficiency than currently designed systems. Specifically, $SO_x$, HCl, $NO_2$, and Hg removal efficiencies approach 100% with the proposed process without any additional capital and only minor operating expenditures. For example, the heat exchanger used to cool the condensed gas stream can include a condenser separator for removing the impurities from the system. Removing the condensed impurities from the system prevents the impurities from being transported downstream and mixed with the condensed carbon dioxide, which would then require separating the impurities from the carbon dioxide in a separate process (e.g., distillation), which significantly adds to the cost of the system.

All of the foregoing impurities mentioned condense at the pressures and temperatures above those of the $CO_2$ removal. Condensing the impurities and removing them from the system at a temperature the $CO_2$ frost point - the point at which $CO_2$ begins to condense - the concentrations of the impurities remaining in the gas phase can be reduced to a few parts per million (depending on pressure and moisture content). In one embodiment, the concentration of the impurities in the purified condensed gas stream (which includes the carbon dioxide) is less than 100 ppm, more preferably less than 10 ppm, and most preferably less than 1 ppm. Consequently, the purity of the carbon dioxide stream can have a purity within the foregoing ranges, without the need to perform distillation.

The impurities can be removed from the process as liquids or solids, most of which have commercial value.

The fate of NO is difficult to assess as it also exhibits substantial non-ideal behavior but is less condensable than the other impurities. Nevertheless, at high pressure, NO absorption and/or catalytic conversion is more efficient and is more cost effective than current atmospheric-pressure systems. If the substantial capital costs dedicated to pollution treatment are applied instead to the proposed process, which in any case removes the same and additional impurities with high efficiency, the effective cost of carbon capture and storage may drop correspondingly (e.g., by 30-40%).

The methods and systems described herein can partially or entirely replace other gas treatment processes, including mercury removal, desulfurization, acid gas treatments, $NO_x$ removal, or a combination of these. Furthermore, the flue gas cleaning described herein can require only trivial marginal capital and operating expenses. The simplest but perhaps not optimal approach involves capturing the impurities with the $CO_2$ stream. However, this produces an acidic and potentially corrosive $CO_2$ stream - a potential problem inside very high-pressure vessels and for later storage or use.

Alternatively, high-pressure liquid water or other sorbents effectively remove most impurities at intermediate pressures. Reductions in most species concentrations of well over 90% are possible by this mechanism, eliminating or reducing the need for existing or new desulfurization plants, mercury removal, SCR and SNCR $NO_x$ reduction technologies, and similar technologies. These systems represent major (typically over 30% in total) capital investments in power plants and represent smaller but significant parasitic losses in efficiency. Their replacement could make the capital and energy costs of the proposed system much more attractive.

## IV. Energy Storage

The pressurized gas represents a potential means of energy storage. Typically, only a fraction of the flue gas stream provides energy storage, with most of the gas stream continuously flowing through the process.

The size of the storage tank depends on the amount of required energy storage and on engineering limitations for high-pressure facilities. Either a multi-vessel storage system or, more cost effectively, a system requiring a single vessel but still providing for storage (discussed below) provide the energy storage capabilities. Storage can occur at any system pressure from the peak pressure in the system to minimize storage volume to low-pressure storage if natural and commonly non-impervious caverns (caves, salt domes, abandoned mines, etc.) are available. High-pressure storage minimizes tank volume and enhances $CO_2$ separation through the several processes discussed earlier, but the high-pressure storage tank increases the total capital cost.

The power required for compression can come from either the power plant or grid-connected intermittent sources such as windmills, or both. The process provides but does not require intermediate storage of compressed gas as stored energy. Turbines regenerate stored power during high-demand or high-revenue cycles. This energy storage scheme increases profitability. In grid systems involving potentially highly variable wind, solar, or other power generation that represents a barrier to additional renewable capacity, as is the case in Denmark and other regions with large intermittent wind sources, this energy storage capability also provides the mechanism to more effectively manage the grid and thereby enable increased renewable wind capacity.

Essentially all grid systems involve daily power demand cycles with large differences from peak to low points.

Perhaps more significantly, the energy storage feature helps solve the system-wide problem of meeting peak demand even as carbon capture technology decreases net effective capacity by shifting the load to lower demand times and using storage to compensate during high demand. This possibly postpones or eliminates the need to construct new generation capacity for $CO_2$ mitigation. To the extent that compression represents a sunk cost and parasitic loss for $CO_2$ sequestration, the effective efficiency and cost of the energy storage are turbine efficiencies (typically 85-90 %) and the cost of the pressure vessel.

A primary feature of one embodiment of the invention is that both energy storage and $CO_2$ capture occur simultaneously. In most cases, the energy storage efficiency and cost effectiveness of this process compete well with alternative systems that provide only energy storage or only $CO_2$ capture. Since this process can be embodied to provide both storage and capture simultaneously with energy and capital costs potentially comparable to only one of these processes by alternative means, this combined process could have substantial energy, capital, and operating cost savings relative to competing processes.

Energy storage issues loom larger in the overall carbon capture and storage (CCS) discussion than seems to be generally acknowledged. All well-documented CCS systems consume large amounts of power, typically 25-30% of a plant net output. Accordingly, an additional 25-30% capacity is required to implement these processes just to maintain current peak capacity. As nearly all power suppliers operate near capacity limits during peak loads, CCS requires either an additional 25-30% of new capacity or sufficient energy storage to levelize peak loads. This issue affects nearly every power system that implements CCS. Independently of CCS, projected new power demands and more efficient capital utilization both would benefit from cost- and energy-effective energy storage. Finally, some regions have large but intermittent energy supplies, such as windmills and solar panels. Management of these highly and rapidly varying supplies limits the amount of usable energy they can provide. Energy storage helps accommodate these large yet highly variable energy supplies. In summary, the three energy storage issues addressed here are: (1) increased peak power demands associated with CCS generally; (2) load leveling generally to increase capital effectiveness, system efficiency, and increased power demand; and (3) integration of windmills and other non-dispatchable, highly variable power supplies in a grid.

The proposed process resolves the issues outlined above in two ways. The simplest resolution somewhat mitigates the third issue - the effects of windmills or other large but intermittent energy supplies on the grid - with virtually no additional equipment beyond a robust grid and properly installed compressor motors. Either the local power plant or the grid can supply the large compression-energy requirements. In normal (no wind) operation, the local power plant provides the compression power, which represents a large parasitic loss. When excess wind or other intermittent energy is available, it drives the compressors, reducing the parasitic losses to the power plant and therefore reducing coal/natural gas/oil/biomass consumption. Current power plants do not have such large parasitic loads and can do little to absorb the energy fluctuations from the mills. Many alternative CCS technologies (essentially all solvent absorption systems) use energy in the form of heat, which is not efficiently replacable by wind energy. However, this system and systems that use air separation units can effectively use the excess wind energy to drive the compressors and provide useful grid management options to absorb large amounts of excess wind energy and reduce boiler load by an equivalent amount.

Wind energy supplies commonly change on much shorter time scales than boilers can accommodate. The high energy storage embodiments of the invention can advantageously provide load leveling for these systems. The compressed gases used in the $CO_2$ separation process described above represent potentially significant resources for energy storage. Since the proposed process compresses the gases for $CO_2$ separation, there is little or no additional efficiency drops or increased loads associated with compression, and the effective efficiency of the energy storage becomes the turbine efficiency, not the product of the turbine and compressor efficiencies and other system losses. In this sense, compressed gas storage integrated with the proposed carbon sequestration system provides energy storage with greater efficiency than existing hydropumped storages systems.

There are additional capital costs associated with providing containment and valving for the compressed gas storage. The specific design of such containment strongly depends on site-specific details. Sites that have natural caverns (salt domes, mine shafts, caves, etc.) suitable for compressed gases can provide relatively large and inexpensive storage, albeit generally at low pressures. Sites with footprint constaints generally would use tall manufactured high-pressure tanks for storage. Both systems need nitrogen turbine systems with capacities that exceed the full-load capacity of the boiler, since at peak times the boiler would generally operate at full load and the energy storage would also operate at maximum load.

In a preferred embodiment, the storage vessel is sized and configured to store at least about 0.5 hour, about 1 hour, about 2 hours, or at least about 4 hours of full-load plant output. In one embodiment, the energy storage can be provided by a series of comparably tall but smaller diameter (and wall thickness) storage vessels. The 2-hour 100% capacity storage amount functionally represents about 8 hours of peaking capacity. That is, if the equivalent of ¼ of the full plant output is stored for eight hours, the result is a 2-hour full-flow-equivalent storage. This amount of storage suffices to accommodate most wind surges from mills and daily cycles in plant operation. The tank size (or number) increases proportionally with storage capacity.

## V. Water Savings

A fully integrated installation can heat the pressurized, nitrogen-rich stream with the boiler to increase the power output. A pressurized nitrogen stream heated to the same temperature as typical steam turbine inlet temperatures (nominally 600 °C) generates power with approximately three times the efficiency as steam under heated from room temperature to similar temperature at similar pressures. Recompressing the nitrogen would greatly reduce this efficiency to below that of steam, but on a once-through basis, the steam is far more efficient than steam/water and avoids the cooling water load associated with water. This reduces, by at least 25-30%, the amount of cooling water needed for power generation for the portion of the power made from the nitrogen turbine.

The embodiment of this process involving $CO_2$ separation at pressure produces pressurized nitrogen as a primary byproduct. In a bolt-on technology, this nitrogen is used both for heat exchange and for power production through turbines. In a fully integrated process, energy can be generated from the nitrogen more efficiently. Specifically, the pressurized nitrogen can be brought to room temperature via heat exchange with the incoming flue gas flow, as indicated in Figure 3. Before expansion through a turbine, the nitrogen can be further heated in the boiler, for example, to temperatures comparable to peak steam temperatures, (e.g., 500 - 600 °C). The nitrogen then passes through a turbine, generating power and potentially a cool-gas stream (depending on initial pressure) as products.

Figure 6 compares the ratio of work produced in a turbine to the heat transferred to the working fluid for each of three working fluids assuming all start at 300 atm and 25 °C and that each is heated to 600 °C at the same pressure and then expanded through a simple turbine (efficiency = 75%) to atmospheric pressure. The water/steam cycle has a net ratio of 30% and is a reasonable representation of small-scale Rankine cycle systems without superheat or other sophisticated technologies. Nitrogen, by comparison, has a ratio of approximately 90%, three times higher than steam. That is, the amount of power generated in 90% of the amount of heat put into the already pressurized gas stream. Importantly, This is an open loop system, not a cycle comparison. Specifically, the energy efficiency costs of recompressing the steam/water cycle are negligible since the cycle forms water, which is easily and efficiently compressed. However, the energy costs of recompressing any gas are very large and would result in cycle efficiencies that are lower than that of water. The helium data indicate that helium would make an even better working fluid, primarily because it has a low and essentially constant heat capacity. Since there is virtually no helium in flue gas this is not a realistic option in practice but is a useful comparison to illustrate the advantages of light-gas turbines. As indicated, more energy is derived from the turbine than is placed into the helium in the form of heat. This emphasizes the point that the energy derived from the turbine includes both energy from the heat and energy from the initial compression. The advantages of this light-gas turbine increase with increasing inlet temperature.

The high-temperature heat used in the nitrogen turbine decreases the amount of heat transferred to the steam turbine. This typically only makes sense if the efficieny advantage is large enough to justify the additional cost of a second turbine and, in a more sophisticated design, as second superheater set.

Nitrogen turbines require no cooling water since nitrogen is vented to the atmosphere at the end of the process. Furthermore, nitrogen system do not face a realistic limit in exit temperature because of condensation, so the exit gas can be very cool, depending on the inlet temperature and pressure. The cool exit gases and the decrease in cooling water demand both significantly decrease the amount of water required for the steam cycle, potentially by 25-30%.

Other processes could employ this technology to reduce water demands. Specifically, air separation units (ASUs) universally produce liquid nitrogen at some stage in the process. Pressurizing this liquid nitrogen and passing it through similar paths in the ASU as is currently done results in an effluent typically near room temperature but at high pressure. Passing this high-temperature nitrogen through a boiler reduces cooling water demands and increases efficiency for the same reasons and to similar extents as are explained above.

The oxygen content remaining in the nitrogen-rich stream is nearly ideally suited for firing in a gas turbine. The compressed, preheated nitrogen-rich gas flowing from the boiler preheat cycle near the end of the process are well suited to gas turbine firing rather than inert nitrogen turbine use, with a corresponding large increase in power generation. However, the $CO_2$ in the resulting gas, while representing a relatively small emission, would require additional process steps if it must be captured.

## VI. Thermodynamics

The cool temperatures and high pressures encountered in much of the process of the invention lead to highly non-ideal thermochemical behavior, in particular as $CO_2$ and several pollutants - especially $SO_2$ - are concerned. In the ideal approximation, $CO_2$ mole fractions times total pressure (partial pressures) behaves similar to $CO_2$ vapor pressures. That is, in ideal systems $CO_2$ forms two phases through condensation or freezing whenever its partial pressure exceeds the vapor pressure of $CO_2$ at the same pressure.

Figure 7 illustrates the $CO_2$ phase diagram for ideal behavior over a broad range of temperature (linear scale) and pressure (logarithmic scale). The lines separate regions of solid, liquid, and vapor, with the triple point and critical point indicated.

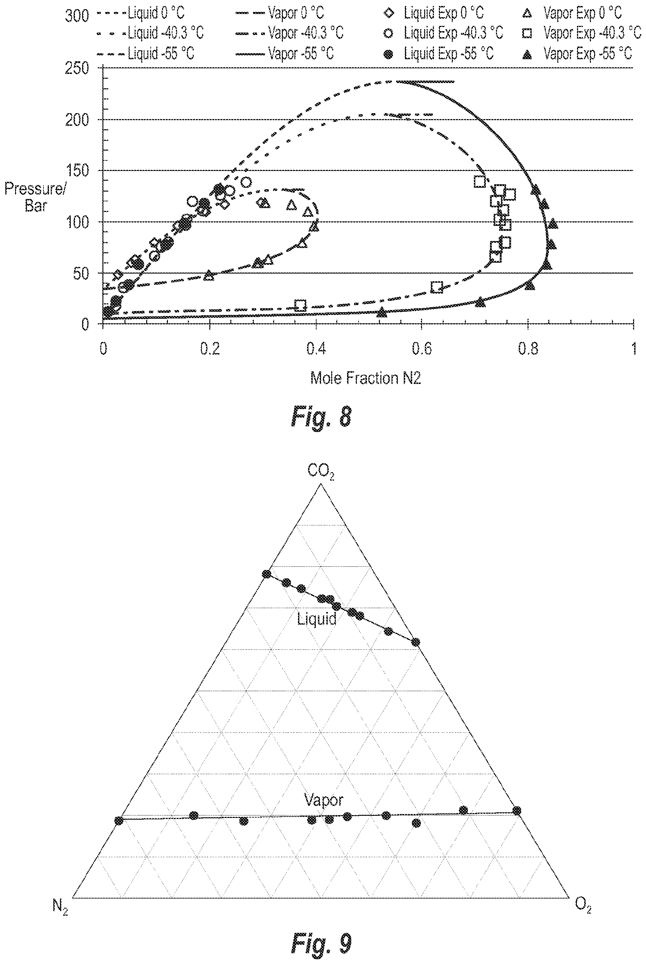

However, in a real-world application, flue gas does not form an ideal system. In the liquid region, the liquid that forms is a mixture of $CO_2$ and light gases. More significantly, with 14% $CO_2$ in nitrogen, no liquid forms under any conditions of temperature or pressure. Non-ideal thermodynamics of the binary $CO_2$-$N_2$ system appear with measured data (Zenner and Dana 1963) in Figure 8 at three temperatures ranging from 0 °C to -55 °C, near the $CO_2$ triple point. The data on the vapor and liquid branches of each curve represent corresponding endpoints of equilibrium tie lines in the two phases.

The data and predictions agree reasonably well over most of the region and represent a substantial improvement compared with the ideal predictions. As temperature decreases, the size of the two phase region increases. However, decreasing the temperature significantly further than the lowest temperature illustrated in Figure 8, -55 °C, leads to solid rather than liquid $CO_2$ formation. At a nominal 14% $CO_2$ in nitrogen (typical flue gas), no liquid forms at any temperature or pressure, in stark contrast to the ideal behavior shown in Figure 7. That is, the frost/dew point line for typical flue gases (14% $CO_2$) never enters the liquid-vapor region, unlike the Rault's law estimates in Figure 7. This behavior presents some operational difficulties in that it requires solids handling. However, the formation of a solid represents a substantial thermodynamic and energy advantage since the solid that forms contains essentially no nitrogen or oxygen impurities and does not have to go through a subsequent distillation or similar purification process. Liquid distillation in air separation units represents the largest energy demand, mostly associated with cooling for the condenser. The operational challenges associated with solids handling are discussed later.

The compressed light gases contain small amounts of oxygen in addition to carbon dioxide and nitrogen. The oxygen contents change (generally decrease) the size of the two-phase region shown in Figure 8. Typical three-component data appear in Figure 9, for conditions with an average pressure and temperature of 129 atm and -55 °C, respectfully. The left side of this diagram represents 0% $O_2$ and corresponds to the conditions in Figure 8 at 129 atm, as can be verified by checking the data. Increasing $O_2$ concentrations decrease the composition range over which two phases form. However, the changes are not overly complex. That is, the $O_2$, under these conditions, behaves much the same as an equivalent amount of extra nitrogen would behave. We have additional data at other pressures and temperatures. Existing, although advanced, thermodynamic models can accurately predict the two-phase regions for multicomponent (e.g., $N_2$-$CO_2$-$O_2$) systems, and the model predictions demonstrated above reasonably predict the two-phase region for the $N_2$-$CO_2$ system. However, ideal-gas and most non-ideal-gas thermodynamic models provide misleading estimates of this behavior that have large impacts on design and operation.

Thermodynamic data for typical flue gases including nitrogen- and sulfur-containing impurities at conditions of temperature and pressure of importance to this analysis do not exist in the open lierature. However, similar thermodynamic models used to predict the data above can be used to estimate such data. A useful summary of such data relevant to this process appears in Figure 10, where the frost points (dry ice formation) for a typical dry flue gas containing 14% $CO_2$, 3% $O_2$, and trace amounts (100 ppm) of HCl, NO, and $SO_2$. Corresponding conditions for 90%, 95%, and 99% of the $CO_2$ removed from the gas phase also appear. The labeled points correspond to the peak temperatures on each curve. To achieve any of the indicated performance points (frost formation, 95% $CO_2$ removal from the gas phase, etc.), conditions in the process at the point of separation must lie somewhere on the corresponding line.

As indicated, high pressures, low temperatures, or both, must be produced to remove the $CO_2$ by condensation/desublimation. The labeled points of the curve represent the highest pressures in this section. That is, beyond these point, higher pressures and lower temperatures are required, both of which would require more energy. The portion of each curve up to this point is the functionally interesting option for this process in most applications.

The process of gas compression, cooling, and expansion generally provides the low temperatures indicated in Figure 10. This can involve either a closed-loop, typically light-gas-based refrigeration system or can involve direct compression and expansion of the flue gas without a separate refrigeration cycle. The latter has the advantage that no additional temperature difference needs to be developed to drive heat transfer in a heat exchanger but has the disadvantage of a lower quality working fluid. Either process works, but this discussion assumes direct compression/expansion of the flue gas. The overall scheme is to compress and cool the gas to a sufficient pressure that its subsequent expansion through a turbine brings the gas near the frost point. The gas then further expands, typically through an expansion valve or turbine, until it reaches a temperature and pressure shown nominally in Figure 10 for a given fractional capture. The figures associated with Figure 10 can vary depending on the specific flue gas composition. In an externally cooled implementation according to the invention, the second stage heat exchanger provides all of the cooling rather than using an expansion turbine or valve. A critical design parameter is the maximum pressure required to reach a condition along the curve representing the desired removal efficiency starting from a near room temperature initial condition.

Figure 10 provides an indication of the advantages of this process over air separation and oxyfiring. Traditional air separation units require much more cooling, for example to temperatures between -206 °C and -183 °C at 1 atm (50 to 60 °C cooler than the proposed process). Additionally, a series of two or three distillation columns revaporize and recondense the gases several times each, and the product $CO_2$ must be recompressed as a gas. All three of these considerations greatly increase the energy requirements for the system.

The overall energy balance is a complex function of the inlet gas temperatures at each stage of compression and expansion, the extent of $CO_2$ removal, and the specific composition of the flue gas, among other things.

Most alternative $CO_2$ sequestration processes (amine/chilled ammonia absorption, oxyfuel combustion, oxygen-blown gasification) have power requirements of approximately 29% of the total power plant output.

## VII. Dense-Gas Settling

Effects of gravity on concentration gradients generally are not included in transport equations. The binary Maxwell-Stefan equations provide one means of including them. In its general form, this equation describes the total local molar flux (absent of convection terms) as the sum of terms involving activity gradients, pressure

$$\vec{J}_A = -c\bar{\mathcal{D}}_{AB}\left\{ x_A \vec{\nabla}\ln a_A + \frac{1}{cRT}\left[ (\phi_A - \omega_A)\vec{\nabla}p - \rho\omega_A\omega_B(\vec{g}_A - \vec{g}_B) \right] + k_T\vec{\nabla}\ln T \right\}$$

gradients, differences in body forces, and temperature gradients as follows where

$$k_T = \frac{-D_A^T}{\rho\bar{\mathbb{D}}_{AB}} = \frac{-D_A^T}{\rho\bar{\mathcal{D}}_{AB}}\frac{x_A x_B}{\omega_A\omega_B} = \alpha_T x_A x_B = \sigma_T x_A x_B T$$

and

$$\bar{\mathcal{D}}_{AB} = \frac{x_A x_B}{\omega_A\omega_B}\mathbb{D}_{AB}$$

The solutions to these equation as applied in our analysis does not lend itself to an analytical solution. Rather, numerical estimates of steady-state concentration profiles were performed. However, some approximate analytical solutions provide more convenient though less accurate estimates of ultimate concentration profiles. The presence of $x_A$ in the first term within curly brackets above is the major reason this equation has no analytical solution. Equating this value to the constant initial mole fraction, $x_{A,t}$, is the same as assuming that mass fraction is proportional to the mole fraction, with the proportionality constant of

$$\frac{M_A}{M_B + x_{A,i}(M_A - M_B)},$$

which is precisely correct for gases with the initial mole fraction of species A and is a reasonable estimate so long as the actual concentration of species A only modestly departs from this initial value. With this assumption, the solution to the equation is

$$\frac{x_A}{x_{A,0}} = \exp\left[ \frac{[gM_A(M_B - M_A)(x_{A,i} - 1) + ART[M_B + x_{A,i}(M_A - M_B)]]z}{RT[M_B(x_{A,i} - 1) - x_{A,i}M_A]} \right]$$

where $x_{A,0}$ is the steady-state concentration at the bottom of the tank and which, neglecting the activity coefficient term A, becomes

$$\frac{x_A}{x_{A,0}} = \exp\left\{\frac{\left[gM_A(M_A - M_B)(x_{A,i} - 1)\right]z}{RT\left[M_B + x_{A,i}(M_A - M_B)\right]}\right\}$$

This shows that the concentration profile is approximately exponential, decreases with increasing height for the species with the higher molecular weight, is essentially independent of pressure, becomes more pronounced with decreasing temperature, and is greatest for a species with a small initial concentration. Most of these trends seem intuitively correct. Some, such as the lack of pressure and source of the temperature dependencies, may not be obvious. The only pressure dependence in this expression is in the activity coefficient term, and even this is modest as the pressure dependence only enters as the gradient in the log of this term. This term also depends on temperature, but the dominant temperature dependence is in the denominator of the exponentiation argument. Increasing temperature should increase thermal mixing of species and hence decrease the concentration, consistent with the estimation above. Notably, this temperature term does not arise through the increase in diffusivity with temperature, as the diffusivity dropped out of the equation with the steady state assumption.

Alternative derivations from the literature [Bird et al, 2002, Guggenheim, 1950] result in the analytical expression

$$\left(\frac{x_A}{x_{A0}}\right)^{\overline{V}_B}\left(\frac{x_{B0}}{x_B}\right)^{\overline{V}_A} = \exp\left[(M_B\overline{V}_A - M_A\overline{V}_B)\left(\frac{gz}{RT}\right)\right]$$

Stylistic and technical objections to this equation include raising numbers to powers that have units, having numbers with units as arguments of exponentiation, apparent assumptions of proportional relationships between mole and mass fractions, and neglecting pressure dependence of molar volumes. Assuming all partial molar volumes are equal and otherwise following a derivation similar to that in these literature sources, an alternative analytical expression for the mole fraction variation with height is

$$x_A = 1 + \frac{x_{A0} - 1}{1 + x_{A0}\left(\exp\left[(M_B - M_A)\left(\frac{gz}{RT}\right)\right] - 1\right)}$$

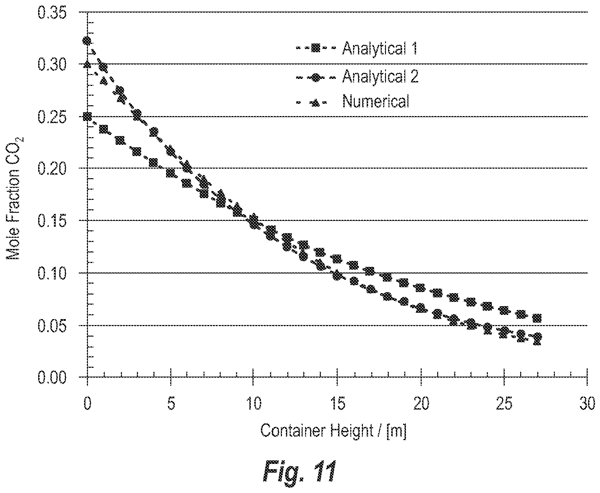

This expression (Analytical 1), together with the previously derived analytical approximation (Analytical 2) and a numerical solution to the differential equation (neglecting gradients in activity coefficients) appears in Figure 11 for a nominal 27 m tall, 300 K storage vessel. All three solutions show that the $CO_2$ concentration in the bottom of the tank increases, indeed by over two times (by the most sophisticated estimate) relative to its initial or mean value (0.135 in these cases). This decreases the required pressure and temperature of the system since the partial pressure of $CO_2$ at the point it condenses significantly exceeds the average partial pressure. Specifically, this reduces the estimated power consumptions shown earlier by approximately a factor of 0.8 and increases the purities of both the nitrogen and carbon dioxide streams. The final concentration distribution estimates shown in Figure 11 provide reasonably rigorous estimates of the ultimate concentration profile generated in the tanks.

## VIII. Comparison With Other Technology

The advantages of the proposed process stem from the following three process features. First, the methods and systems described herein utilize a slightly lower volumetric flowrate of gases leaving the combustor on a dry basis compared to the dry volumetric flowrate of air entering the combustor in an oxyfiring system. Compression and expansion work scales with volumetric, not mass, flowrates. Second, the methods and systems described herein compress the gas only once, whereas the combination of an ASU and post compression compresses the oxygen-containing molecules twice. Finally, the methods and systems separate $CO_2$ from nitrogen, a far less capital and energy intensive task than separating oxygen from nitrogen.

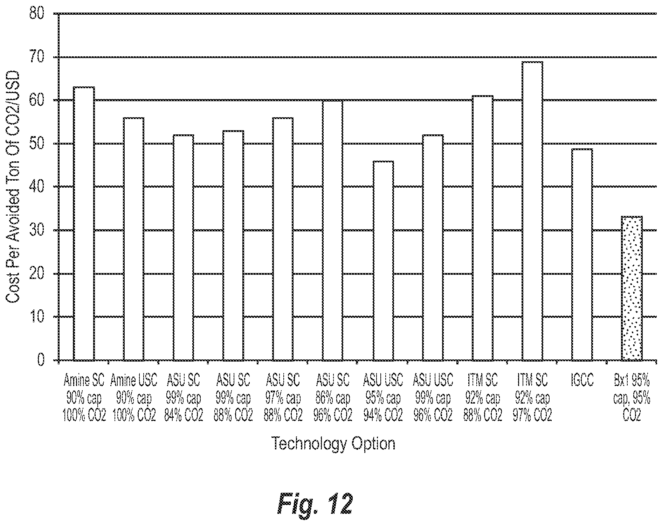

Aside from these benefits, the proposed process has substantial economic and energy advantages. Figure 12 illustrates estimated cost per avoided ton of $CO_2$ for a variety of competing processes to the process described herein. The process described in the present invention is referred to as ("Bx1") in Figure 12. The alternatives that can be compared include the fuel, fixed operating and maintenance (FOM), variable operating and maintenance (VOM), capital (Cap), and transportation, storage and monitoring (TS&M) costs associated with $CO_2$ management. Systems include supercritical pc combustion (SC), ultra-supercritical pc combustion (USC), integrated gasification combined cycle (IGCC),

and $CO_2$ capture technologies based on amine scrubbing (Amine), air separation units (ASU), and ion-transport membranes. Aside from Bx1, the costs are derived from NETL-based analyses (Ciferno 2007; Klara 2007; Klara 2007), with methods and assumptions as similar as possible between the NETL-based systems and the Bx1 system. However, the extensive documentation of the NETL-based systems does not include many critical parameters, including such basic things as turbine and compressor efficiencies and costs associated with $SO_x$ and $NO_x$ control.

The technology proposed here, called Bx1 in the following figures, competes well with the other 11 feasible and evaluated technologies based on cost per ton of avoided $CO_2$ as shown in Figure 12.

The energy storage capacity of this technology avoids or minimizes the need to construct additional power plants to meet the demand of the substantial 20-30% additional power needed to drive the sequestration process. By shifting loads through energy storage, the same plant can partially or fully supply this additional power for low-load periods.

The combination of desulfurization and de-$NO_x$ processes account for 25-30% of the capital in a modern power plant. Both can potentially be replaced by this process, significantly reducing the greenfield capital cost for the Bx1 process and, to the extent the sunk capital is partially recoverable, decreasing the retrofit costs as well.

These processes also account for much of the non-fuel based operating costs and much of the on-site hazard and safety issues in modern power plants. These costs and concerns can be eliminated from both existing and greenfield installations.

Finally, the Bx1 process in essentially a bolt-on process, requiring little boiler modification in its simplest forms. This compatibility with existing power systems avoids the costs associated with builing or permitting significant new technology and, for the majority of US power stations that are already paid for, avoids substantial capital costs.

None of the advantages listed in the last three paragraphs are included in the cost analysis presented above with regard to Figure 12. In these regards, the costs provided in Figure 12 for the Bx1 technology are conservatively estimated.

The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

**Claims**

1. A method for efficiently separating carbon dioxide from a flue gas (210) of a hydrocarbon processing plant, comprising:

    (i) removing moisture from a flue gas (210) of a hydrocarbon processing plant to yield an at least partially dried flue gas (225);
    (ii) compressing the at least partially dried flue gas to yield a compressed-gas stream (230), wherein the compressed gas stream (230) includes carbon dioxide;
    (iii) reducing the temperature of the compressed-gas stream (230) to a temperature $T_1$ using a first heat exchanger;
    (iv) reducing the temperature of the compressed-gas stream (230) to a second temperature $T_2$ using a second heat exchanger, wherein $T_2 < T_1$ and wherein at least a portion of the carbon dioxide from the compressed gas stream (230) condenses to a solid in a chamber, thereby yielding a solid condensed-phase carbon dioxide component and a light-gas component,
    (v) accumulating the solid condensed-phase carbon dioxide component on the surfaces of the chamber where the condensation is carried out, thereby separating the solid condensed phase carbon dioxide component from the light gas component to produce a light gas stream (250), removing the solid condensed phase carbon dioxide component from the surface by mechanical means and collecting the solid condensed-phase carbon dioxide component on a mesh, and
    (vi) using at least a portion of the light-gas stream (250) in the second heat exchanger to cool the compressed-gas stream (230).

2. A method as in claim 1, wherein $T_1$ is in a range from about 0 °C to about 100 °C.

3. A method as in claim 1, wherein $T_2$ is in a range from about -175 °C to about - 100 °C.

4. A method as in claim 1, wherein the first heat exchanger (236) is cooled using water and/or ambient air.

5. A method as in claim 1, wherein the flue gas includes at least 10% carbon dioxide and at least 10% light gas.

6. A method as in claim 1, wherein the flue gas is an exhaust from a coal fired combustion or gasification process.

**7.** A method as in claim 1, wherein the compressed gas stream (230) is at a pressure of at least 34.47 KPa (5 psi).

**8.** A method as in claim 7, wherein the light-gas stream (250) is compressed and stored in a vessel at a pressure of at least about 68.95 KPa (10 psi) and subsequently expanded to generate power.

**9.** A method as in claim 1, wherein the compressed gas stream (230) is at a pressure of at least about 13.79 KPa (2 psi).

**10.** A method as in claim 9, wherein the light-gas stream (250) is stored in a vessel and subsequently expanded to generate power, wherein the power is generated and placed on a power grid having periods of high power demand and periods of low power demand, wherein the light-gas stream is stored during a period of low power demand and expanded to produce power during a period of high power demand.

**11.** A method as in claim 10, wherein the light-gas stream (250) is compressed using a compressor driven by an intermittent power source.

**12.** A method as in claim 10, wherein the intermittent power source is a wind source.

**13.** A method as in claim 1, wherein the carbon dioxide is condensed to a solid by desublimation.

**14.** A method as in claim 1 **characterized by** comprising the step of condensing one or more impurities and removing the condensed one or more impurities from the gas stream prior to step (iv) .

**15.** A method as in claim 14, wherein the one or more impurities are selected from the group consisting of, $SO_2$, $NO_2$, HCl, or Hg.

**16.** A method as in claim 14, wherein the concentration of each of the one or more impurities is less than 10 ppm in the compressed-flue gas.

**Patentansprüche**

**1.** Verfahren zum effizienten Trennen von Kohlenstoffdioxid aus einem Rauchgas (210) einer Kohlenwasserstoff-Aufbereitungsanlage, umfassend:

(i) Entfernen von Feuchtigkeit aus einem Rauchgas (210) einer Kohlenwasserstoff-Aufbereitungsanlage, um ein zumindest teilweise getrocknetes Rauchgas (225) zu erhalten;
(ii) Verdichten des zumindest teilweise getrockneten Rauchgases, um einen Druckgasstrom (230) zu erhalten, wobei der Druckgasstrom (230) Kohlenstoffdioxid beinhaltet;
(iii) Verringern der Temperatur des Druckgasstroms (230) auf eine Temperatur $T_1$ unter Verwendung eines ersten Wärmetauschers;
(iv) Verringern der Temperatur des Druckgasstroms (230) auf eine zweite Temperatur T2 unter Verwendung eines zweiten Wärmetauschers, wobei $T_2 < T_1$ gilt und wobei zumindest ein Teil des Kohlenstoffdioxids aus dem Druckgasstrom (230) in einer Kammer zu einem Feststoff kondensiert, wodurch ein kondensierter Festphasen-Kohlenstoffdioxidbestandteil und ein Leichtgasbestandteil erhalten wird,
(v) Akkumulieren des kondensierten Festphasen-Kohlenstoffdioxidbestandteils auf den Oberflächen der Kammer, wo die Kondensation erfolgt, wodurch der kondensierte Festphasen-Kohlenstoffdioxidbestandteil von dem Leichtgasbestandteil getrennt wird, um einen Leichtgasstrom (250) zu erzeugen, Entfernen des kondensierten Festphasen-Kohlenstoffdioxidbestandteils von der Oberfläche vermittels mechanischer Mittel und Sammeln des kondensierten Festphasen-Kohlenstoffdioxidbestandteils auf einem Netz, und
(vi) Verwenden zumindest eines Teils des Leichtgasstroms (250) in dem zweiten Wärmetauscher, um den Druckgasstrom (230) zu kühlen.

**2.** Verfahren nach Anspruch 1, wobei $T_1$ in einem Bereich von etwa 0 °C bis etwa 100 °C liegt.

**3.** Verfahren nach Anspruch 1, wobei $T_2$ in einem Bereich von etwa -175 °C bis etwa - 100 °C liegt.

**4.** Verfahren nach Anspruch 1, wobei der erste Wärmetauscher (236) unter Verwendung von Wasser und/oder Umgebungsluft gekühlt wird.

**5.** Verfahren nach Anspruch 1, wobei das Rauchgas zumindest 10 % Kohlenstoffdioxid und zumindest 10% Leichtgas beinhaltet.

**6.** Verfahren nach Anspruch 1, wobei das Rauchgas ein Abgas aus einem mit Kohle befeuerten Verbrennungs- oder Vergasungsprozess ist.

**7.** Verfahren nach Anspruch 1, wobei der Druckgasstrom (230) einen Druck von zumindest 34,47 KPa (5 psi) besitzt.

**8.** Verfahren nach Anspruch 7, wobei der Leichtgasstrom (250) in einem Gefäß bei einem Druck von zumindest etwa 68,95 KPa (10 psi) komprimiert und gespeichert wird, und anschließend expandiert wird, um Strom zu erzeugen.

**9.** Verfahren nach Anspruch 1, wobei der Druckgasstrom (230) einen Druck von zumindest etwa 13,79 KPa (2 psi) besitzt.

**10.** Verfahren nach Anspruch 9, wobei der Leichtgasstrom (250) in einem Gefäß gespeichert und anschließend expandiert wird, um Strom zu erzeugen, wobei der Strom erzeugt und in einem Stromnetz mit Perioden von hohem Strombedarf und Perioden von niedrigem Strombedarf eingespeist wird, wobei der Leichtgasstrom während einer Periode niedrigen Strombedarfs gespeichert wird, und während einer Periode hohen Strombedarfs expandiert wird, um Strom zu erzeugen.

**11.** Verfahren nach Anspruch 10, wobei der Leichtgasstrom (250) unter Verwendung eines Kompressors, der durch eine intermittierende Stromquelle angetrieben wird, komprimiert wird.

**12.** Verfahren nach Anspruch 10, wobei die intermittierende Stromquelle eine Windquelle ist.

**13.** Verfahren nach Anspruch 1, wobei das Kohlenstoffdioxid vermittels Resublimieren zu einem Feststoff kondensiert wird.

**14.** Verfahren nach Anspruch 1, **gekennzeichnet durch** das Umfassen des Schritts des Kondensierens von einer oder mehr Verunreinigungen und Entfernen der einen oder mehr kondensierten Verunreinigungen aus dem Gasstrom vor Schritt (iv).

**15.** Verfahren nach Anspruch 14, wobei die eine oder mehr Verunreinigungen ausgewählt sind aus der Gruppe bestehend aus $SO_2$, $NO_2$, HCl oder Hg.

**16.** Verfahren nach Anspruch 14, wobei die Konzentration von jeder der einen oder mehr Verunreinigungen weniger als 10 ppm in dem komprimierten Rauchgas beträgt.


**Revendications**

**1.** Procédé pour séparer efficacement du dioxyde de carbone par rapport à un gaz de combustion (210) d'une installation de traitement d'hydrocarbures, comprenant :

> (i) l'élimination d'humidité d'un gaz de combustion (210) d'une installation de traitement d'hydrocarbures pour donner un gaz de combustion au moins partiellement asséché (225) ;
> (ii) la compression du gaz de combustion au moins partiellement asséché pour donner un courant de gaz comprimé (230), dans lequel le courant de gaz comprimé (230) comporte du dioxyde de carbone ;
> (iii) la réduction de la température du courant de gaz comprimé (230) à une température $T_1$ à l'aide d'un premier échangeur de chaleur ;
> (iv) la réduction de la température du courant de gaz comprimé (230) à une deuxième température $T_2$ à l'aide d'un deuxième échangeur de chaleur, dans lequel $T_2 < T_1$ et dans lequel au moins une portion du dioxyde de carbone issu du courant de gaz comprimé (230) se condense en solide dans une chambre, pour ainsi donner un composant de dioxyde de carbone à phase condensée solide et un composant de gaz léger,
> (v) l'accumulation du composant de dioxyde de carbone à phase condensée solide sur les surfaces de la chambre où la condensation est réalisée, pour ainsi séparer le composant de dioxyde de carbone à phase condensée solide par rapport au composant de gaz léger pour produire un courant de gaz léger (250), éliminer le composant de dioxyde de carbone à phase condensée solide depuis la surface par des moyens mécaniques et collecter le composant de dioxyde de carbone à phase condensée solide sur un maillage, et

(vi) l'utilisation d'au moins une portion du courant de gaz léger (250) dans le deuxième échangeur de chaleur pour refroidir le courant de gaz comprimé (230).

2. Procédé selon la revendication 1, dans lequel $T_1$ se trouve dans une plage d'environ 0 °C à environ 100 °C.

3. Procédé selon la revendication 1, dans lequel $T_2$ se trouve dans une plage d'environ -175 °C à environ -100 °C.

4. Procédé selon la revendication 1, dans lequel le premier échangeur de chaleur (236) est refroidi à l'aide d'eau et/ou d'air ambiant.

5. Procédé selon la revendication 1, dans lequel le gaz de combustion comporte au moins 10 % de dioxyde de carbone et au moins 10 % de gaz léger.

6. Procédé selon la revendication 1, dans lequel le gaz de combustion est un échappement d'un processus de combustion ou de gazéification de charbon.

7. Procédé selon la revendication 1, dans lequel le courant de gaz comprimé (230) est à une pression d'au moins 34,47 kPa (5 psi).

8. Procédé selon la revendication 7, dans lequel le courant de gaz léger (250) est comprimé et stocké dans une cuve à une pression d'au moins environ 68, 95 kPa (10 psi) et est ultérieurement détendu pour générer de l'énergie.

9. Procédé selon la revendication 1, dans lequel le courant de gaz comprimé (230) est à une pression d'au moins environ 13,79 kPa (2 psi).

10. Procédé selon la revendication 9, dans lequel le courant de gaz léger (250) est stocké dans une cuve et ultérieurement détendu pour générer de l'énergie, dans lequel l'énergie est générée et placée sur un réseau d'énergie ayant des périodes de demande d'énergie élevée et des périodes de demande d'énergie faible, dans lequel le courant de gaz léger est stocké pendant une période de demande d'énergie faible et détendu pour produire de l'énergie pendant une période de demande d'énergie élevée.

11. Procédé selon la revendication 10, dans lequel le courant de gaz léger (250) est comprimé à l'aide d'un compresseur entraîné par une source d'énergie intermittente.

12. Procédé selon la revendication 10, dans lequel la source d'énergie intermittente est une source éolienne.

13. Procédé selon la revendication 1, dans lequel le dioxyde de carbone est condensé en solide par désublimation.

14. Procédé selon la revendication 1, **caractérisé en ce qu'**il comprend l'étape consistant à condenser une ou plusieurs impuretés et à éliminer l'une ou plusieurs impuretés condensées par rapport au courant de gaz avant l'étape (iv).

15. Procédé selon la revendication 14, dans lequel l'une ou plusieurs impuretés sont choisies dans le groupe constitué par $SO_2$, $NO_2$, HCl ou Hg.

16. Procédé selon la revendication 14, dans lequel la concentration de chacune de l'une ou plusieurs impuretés est inférieure à 10 ppm dans le gaz de combustion comprimé.

100

110 — Remove Moisture From Flue Gas

120 — Compress And Cool Flue Gas To T₁

130 — Condense And Remove Impurities

140 — Condense CO₂

150 — Seperate CO₂ Component From Light Gas Component

160

165 — Use Light Gas Stream To Cool Flue Gas

170 — Use CO₂ Stream To Cool Flue Gas

175 — Store Portion Of Light Gas Stream

180 — Sequester CO₂

*Fig. 1*

*Fig. 2*

*Fig. 3*

*Fig. 4*

*Fig. 5*

*Fig. 6*

*Fig. 7*

Fig. 8

Fig. 9

Fig. 10

*Fig. 11*

*Fig. 12*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5467722 A
- US 1992486 A

- WO 2010012658 A